# EUROPEAN PATENT SPECIFICATION

(11) **EP 1 707 859 B1**
(45) Date of publication and mention of the grant of the patent: **26.09.2012**
(21) Application number: 06075287.0
(22) Date of filing: 09.02.2006
(51) Int. Cl.: F16L 3/13

(54) **Mounting clamp for a pipe**
Montagesattel für ein Rohr
Collier de montage pour un tuyau

(30) Priority: 09.02.2005 NL 1028227
(43) Date of publication of application: 04.10.2006
(73) Proprietor: ABB B.V., 6716 AA Ede (NL)
(72) Inventor: Witte, Adriaan Marinus, 6716 AA Ede (NL)
(74) Representative: Ferguson, Alexander

(56) References cited:
- FR-A- 2 436 903
- FR-A- 2 770 610
- US-A- 2 567 386
- US-A- 2 747 821

## Description

The invention relates to a saddle for attaching a tube to a wall, such as for instance a form wall for casting concrete walls. Such a saddle is also called a casting saddle.

A known synthetic casting saddle comprises a holder for attaching a tube to the saddle and a central pin voor attaching the casting saddle to a form wall. The holder comprises two opened claws which can move elastically relative to each other and which can snap into each other by incorporation of the tube. The central pin can be hammered into a hole in the form wall by hammering exactly between de open claws against the upper side of the pin with the sharp side of the head of a hammer. In doing so the casting saddle can easily be damaged when it is not hit. Morever the pin can no longer be hammered in further once a tube has been incorporated in the holder, because the claws, which are snapped into each other then, and the tube itself block the entrance to the upper side of the pin.

FR 2.770.610 A discloses a saddle according to the preamble of claim 1.

It is an object of the invention to provide a saddle for attaching a tube to a wall, which can be nailed into the wall both before and after incorporation of the tube.

It is a further object of the invention to provide a saddle for attaching a tube to a wall by means of an easily operable holder for incorporation of the tube.

It is a further object of the invention to provide a saddle for attaching a tube to a wall which can be simply attached to a wall.

The invention provides a saddle according to claim 1. Because the holder is located in series between the hammer surface and the pin, the hammer surface can be hammered independent of the presence of a tube in the holder. Thus the saddle can be nailed in both before and after attaching the tube to the wall.

Saddles which have already been attached to the tube can be conveniently attached to the wall. The position of the tube can then be an indication for the position of the attachment pin which is to be placed in the hole.

Generating moments on the saddle while it is being hammered in can be kept limited if the hammer surface is located at least partially in line with the attachment pin.

According to a compact embodiment the hammer section is located on an upper section of the holder, which thus defines an insertion opening of the tube.

Preferably the insertion opening is then oblique relative to the attachment pin.

The connection between the attachment pin and the hammer section may become highly rigid for transfer of hammer forces if for instance the saddle comprises reinforcing ribs which are located between the pin and the hammer surface, wherein the reinforcing ribs are preferably arranged so as to form triangular patterns.

Preferably the holder comprises an engagement surface for engagement around a section of an outer wall of the tube, and a resilient lip which is located opposite the engagement surface and which, with a free end, extends in the direction of the engagement surface, wherein the distance between the engagement surface and the free end of the resilient lip is configured so as to retain the tube between the engagement surface and the resilient lip. Thus the tube can be attached to the saddle by pushing it between the engagement surface and the free end of the resilient lip.

For the greater part the hammer force may be led around the tube if the reinforcing ribs are arranged around the side of the engagement surface of the holder which faces away from the engagement surface, and between the engagement surface and the hammer surface.

The resilient lip may be kept in stable engagement against a retained tube if, in a cross-section transverse to the central axis of a tube which is to be attached, the engagement surface comprises a circular segment, wherein the extension of the resilient lip substantially extends through the center of the circular segment.

According to a simple embodiment the holder is configured so as to receive the tube by way of snapping, for instance by snapping of the resilient lips.

For stability of the saddle which is attached to the wall, and the tube which is attached by it, the saddle may comprise a cross-shaped abutment surface for abutment against the wall, wherein the abutment surface comprises an elongated longitudinal plane parallel to the central axis of a tube which is to be attached, and an elongated cross-surface transverse to the central axis of a tube which is to be attached, wherein the attachment pin extends from the crossing point of the abutment surface.

The dimension of the visible parts after removal of form wall after the concrete has set can be small if the transverse plane and preferably the longitudinal plane have a width which is narrower than the width of the holder in the direction of the central axis of a tube which has to be attached.

Preferably the hammer surface is located transversely to the direction of insertion of the pin, wherein the hammer surface preferably comprises corrugations, so that the hammer surface can also be simply recognized as such.

Preferably the pin has a round cross-section, preferably with a diameter of 5 millimetres. This is a bit size which is already commonly used for attachment operations, so that it is not necessary to exchange bits for the actual attachment of the saddle.

For convenience of placing of the pin it may comprise a sharp insertion end.

A lightweight embodiment of the saddle is made of synthetic material, preferably formed integrally, preferably by means of injection moulding.

According to a further aspect the invention furthermore provides a saddle for attaching a tube to a wall, comprising a holder for attaching the tube to the saddle, wherein the holder comprises a resilient lip with a free end so as to lock the tube in the holder. The tube can easily be attached to the saddle by means of the resilient lip.

Preferably the resilient lip thus defines an insertion opening of the holder.

According to a further aspect, the invention provides a saddle for attaching a tube to a wall, comprising a holder for attaching the tube to the saddle, wherein the holder comprises an opening for access of the tube, wherein at least one side of the opening is defined by the resilient lip, said opening being preferably directed sidewards.

Furthermore the invention relates to a saddle for attaching a tube to a wall, a central attachment pin which is fixedly connected to the holder to attach the saddle in a hole in the wall, and a hammer section which is integrally formed with the attachment pin, having a hammer surface for inserting the attachment pin in the hole in the wall by means of hammering, wherein the holder is aligned with the hammer surface and the attachment pin and is accessible sideways.

Furthermore the invention relates to a form wall assembly, provided with a saddle according to the invention.

It is remarked that a U-shaped moulded construction saddle is known, having two attachment pins which are mutually connected with a hammer surface, and between the pins it comprises a holder for a tube. For attachment of this mould construction saddle two holes have to be drilled in the form wall at the correct intermediate distance. When hammering in the pins they have to be alternately driven in further in order to prevent the saddle from being slantingly positioned in the form wall. Moreover a tube has to be placed in the holder before attaching the saddle.

Wherever possibble, the aspects and measures as described in the specification and claims of the appliciation and/or shown in the drawings of this application, can also be applied individually. Those individual aspects, such as the resilient lip, and other aspects may be the subject of divisional patent applications which are directed thereto. This applies in particular to the measures and aspects which are described per se in the sub-claims.

The invention will be elucidated on the basis of a number of exemplary embodiments which are shown in the accompanying drawings. The drawings illustrate in:
Figure 1 an isometrical view of a casting saddle according to the invention;
Figures 2A-C a side view, front view and top view of the casting saddle according to figure 1;
Figure 2D a view through the casting saddle according to the top view of figure 2B; and
Figures 3A-C subsequent operations for attaching a pipe to a wall with the aid of the casting saddle according to figures 1 and 2A-c.

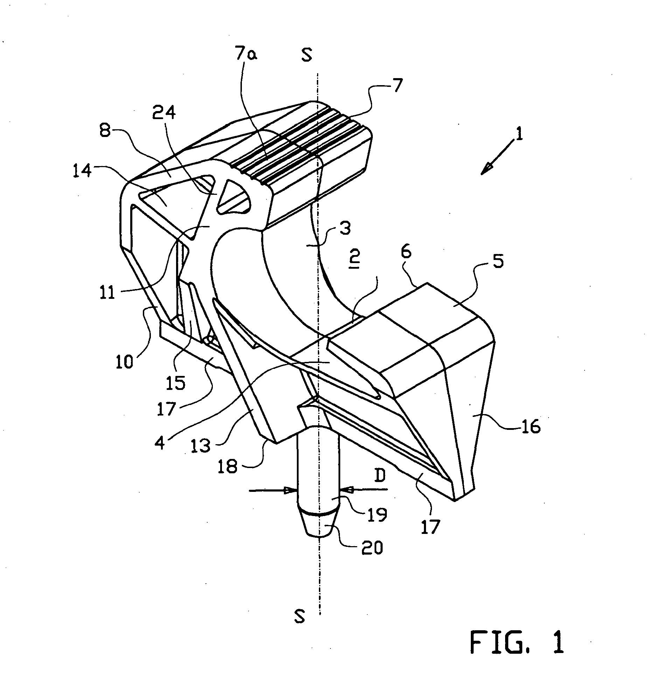

The casting saddle 1 according to figure 1, integrally formed of rigid synthetic material (for instance PP-copolymer) comprises a holder 2 for receiving a round tube, and an attachment pin 19 for attaching the casting saddle 1 to for instance a form wall. In doing so the casting saddle 1, together with the pipe, is incorporated in the concrete to be cast.

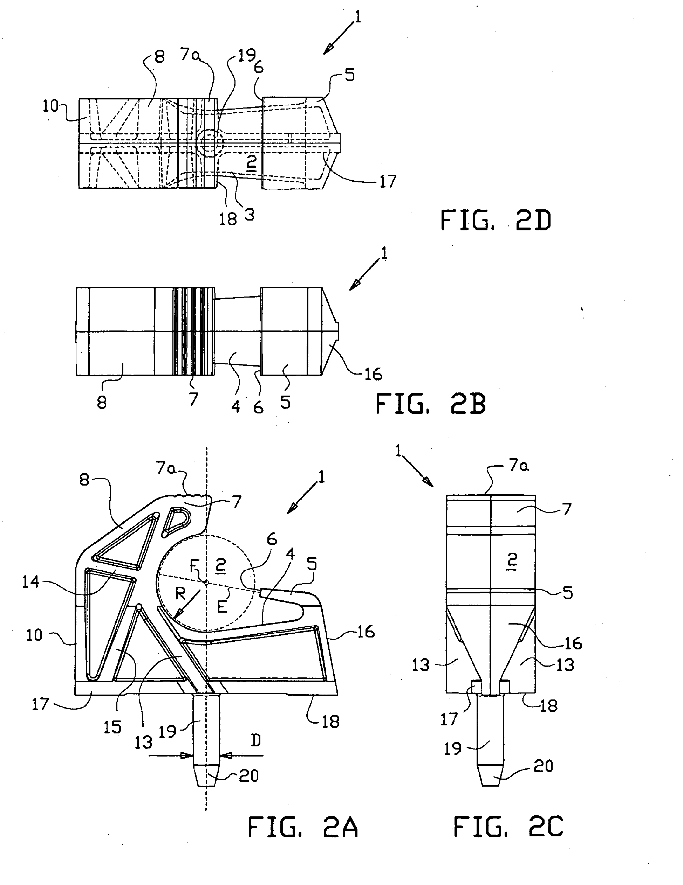

The holder 2 comprises a support wall 11 with a substantially semi-circular support surface 3 and a subsequent straight support surface 4 which, at its lower side, ends in a resilient lip 5 which recedes relative to the support 11 towards the support surface 3. The resilient lip 5 comprises a rectangular leading face 6 which faces towards the support surface 3. The thickness of the resilient lip 5 decreases in the direction of the leading face. The direction in which the elongated resilient lip 5 extends is illustrated in figure 2A. The central axis E of the resilient lip 5 is directed towards the center F of the semicircular support surface 3 with radius of curvature R. In the illustrated example the central axis E passes through the center F.

At the upper side of the holder 2, a hammer section 7 with corrugated hammer surface 7a is located at a short distance from the suport wall 11. The hammer section 7 is connected to a lower transverse rib 17 of the moulded construction saddle 1 via an obliquely declining first rear wall portion 8 and a subsequent second, upright rear wall portion 10. The support wall 11 and the hammer surface 7 with intermediate ribs 13, 14, 15 and 24 are connected to the lower transverse rib 17 in such a way that these intermediate ribs form mutually rigid triangular box girders. A front wall portion 16 is located between the resilient lip 5 and the support wall 11, which merges into the far end of the transverse rib 17.

The second rear wall portion 10, the front wall portion 16 and the intermediate rib 15, which connect to the transverse rib 17 decline obliquely along their side edges in the direction of the transverse rib 17. The central intermediate rib 13 extends from the center of the curved section of the support wall 11 up to the center of the transverse rib 17, so that a cross-shaped lower surface 18 is defined at the lower side of the moulded construction saddle 1.

The attachment pin 19 extends from the crossing point of the cross-shaped lower surface 18, wherein the central axis S of the attachment pin 19 extends through the hammer surface 7a. The attachment pin 19 comprises a conically shaped or sharp insertion end 20. In this example the attachment pin has a circular cross-section with a diameter of 5 mm.

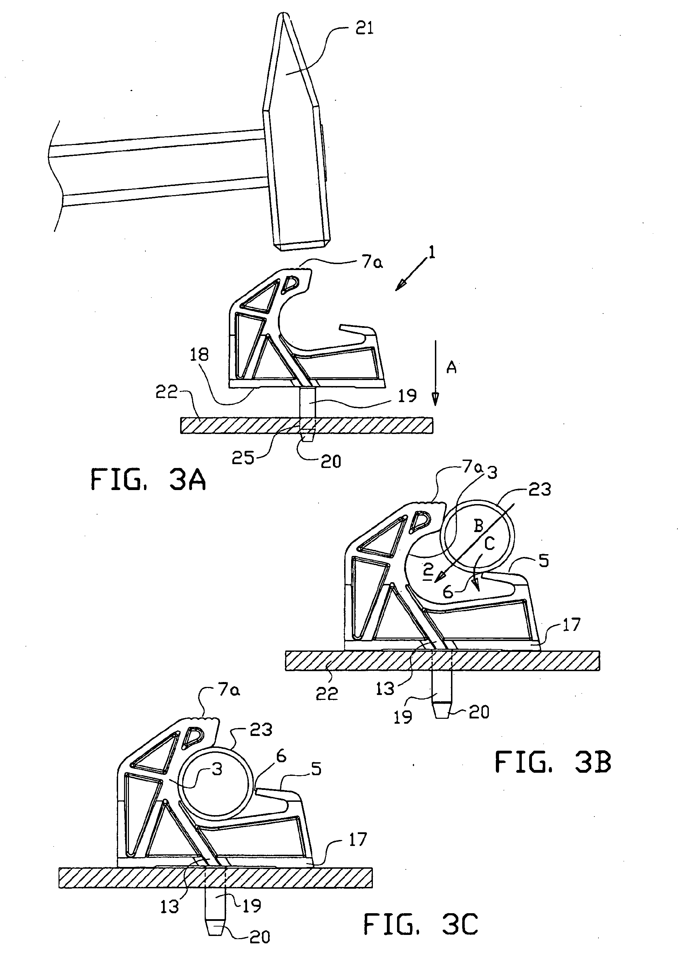

Figure 3A shows the way in which the moulded construction saddle 1 is hammered into an attachment hole 25 in the form wall 22 by means of the head 21 of a hammer. The hammer force of the hammer surface 7a is transferred to the pin 19 by the rear wall portions 8, 10 and the intermediate ribs 13, 14, 15, 24 and the curved part of the support wall 11. The attachment hole 25 has a diameter of 5 mm, so that a good (press) fit with the attachment pin 19 can be achieved. The moulded construction saddle 1 is driven in further until the cross-shaped lower surface 18 abuts the form wall 22, as shown in figure 3B. The generation of moments on the moulded construction saddle 1, which may result in a slanting position of the moulded construction saddle 1, is limited because the central axis S of the attachment pin 19 extends through the hammer surface 7a.

As shown in figure 3B a hollow tube 23 is subsequently forced into the holder 2 in the direction B, the end of the resilient lip 5 being entrained with the tube 23 in the direction C. In this example the tube 23 has a circular cross-section, also with a radius of curvature R. Other cross-sections are possible as well, such as oval, angular etc.

As shown in figure 3C, subsequently the tube 23 is brought into connecting contact with the substantially semicircular support surface 3 of the holder 2 by forcing it further in the direction B, and the resilient lip 5 can return (snap) in the direction D to its position in which its tension is released, as shown in figures 1, 2A. Because the resilient lip 5 rebounds, the tube 23 becomes locked-in between the support surface 3 of the holder 2 and the leading face 6 of the resilient lip 5. Dependent upon the tube diameter and/or the length of the resilient lip 5 the tube 23 may be clampingly incorporated between the support surface 3 and the leading face 6.

Because of the rear wall portions 8, 10 and the intermediate ribs 13, 14, 15, 24 and the round section of the support wall 11, the holder 2 forms a rigid assembly, so that it is also possible to snap the tube 23 in the holder 2 before hammering the moulded construction saddle 1 in the form wall 22. When doing so the tube 23 is hardly deformed because of the rigidity of the holder 2, and damage to the tube 23 by the head 21 of the hammer is prevented by the (short) distance between the hammer surface 7 and the upper side of the locked-in tube 23.

## Claims

1. Saddle (1) for attaching a tube (23) to a wall (22) comprising a holder (2) for attaching the tube to the saddle, a central attachment pin (19) which is fixedly connected to the holder (2) to attach the saddle (1) in a hole (25) in the wall (22), and a hammer section (7) for transfer of hammer forces, in particular rigidly connected to the attachment pin (19), having a hammer surface (7a) for inserting the attachment pin (19) in the hole (25) in the wall by means of hammering, **characterized in that** the holder (2) being located in series between the hammer surface (7a) and the attachment pin (19), wherein a tube receiving space of the holder (2) is located in line with the attachment pin (19).

2. Saddle (1) according to claim 1, wherein the hammer surface (7a) is at least partially located in line with the attachment pin (19).

3. Saddle (1) according to any of the preceding claims, wherein the hammer section (7) is located on an upper part of the holder (2), and thus defines an in-feed opening of the tube (23), wherein the in-feed opening is preferably inclined relative to the attachment pin (19).

4. Saddle (1) according to any of the preceding claims, comprising reinforcing ribs (13,14,15,17,24) which are located between the pin (19) and the hammer section (7), the reinforcing ribs being preferably arranged so as to form triangular patterns.

5. Saddle (1) according to any of the preceding claims, wherein the holder (2) comprises an engagement surface (3) for engagement around a section of an outer wall of the tube (23), and a resilient lip (5) which is located opposite the engagement surface (3) and which, with a free end (6), extends in the direction of the engagement surface (3), wherein the distance between the engagement surface (3) and the free end (6) of the resilient lip (5) is configured so as to retain the tube (23) between the engagement surface (3) and the resilient lip (5).

6. Saddle (1) according to claim 4 and 5, wherein the reinforcing ribs (13,14,15,17,25) are located around the side of the engagement surface (3) of the holder (2) which faces away from the engagement surface (3), and between the engagement surface (3) and the hammer surface (7a).

7. Saddle according to claim 5 or 6, wherein, in a cross-section transverse to the central axis (F) of a tube (23) which is to be attached, the engagement surface (3) comprises a circular segment, wherein the extension of the resilient lip (5) substantially extends through the center of the circular segment.

8. Saddle (1) according to any of the preceding claims, wherein the holder (2) is configured so as to receive the tube (23) by snapping.

9. Saddle (1) according to any of the preceding claims, comprising a cross-shaped abutment surface (18) for abutment against the wall (22), wherein the abutment surface (18) comprises an elongated longitudinal plane parallel to the central axis (F) of a tube (23) which is to be attached, and an elongated cross-surface transverse to the central axis (F) of a tube (23) which is to be attached, wherein the attachment pin (19) extends from the crossing point of the abutment surface (18), wherein preferably the transverse cross-surface and preferably the longitudinal plane have a width which is narrower than the width of the holder (2) in the direction of the central axis (F) of a tube (23) which is to be attached.

10. Saddle (1) according to any of the preceding claims, wherein the hammer surface (7a) is located transversely to the direction of insertion of the pin (19), wherein the hammer surface (7a) preferably comprises corrugations.

11. Saddle (1) according to any of the preceding claims, made of plastic material, preferably integrally formed, preferably by means of injection molding.

12. Saddle (1) according to any of the preceding claims, , wherein the holder (2) comprises a resilient lip (5) with a free end (6), wherein with its free end (6) the resilient lip (5) is directed so as to retain the tube (23) in the holder (2), wherein the resilient lip (5) preferably comprises an end surface which is directed so as to be brought into contact with the tube (23).

13. Saddle (1) according to any of the preceding claims, comprising a resilient lip (5), directed towards the holder (2), for attaching the tube (23) to the saddle (1), wherein the holder (2) comprises an opening for access of the tube (23), wherein at least one side of the opening is defined by the resilient lip (5), said opening being preferably directed sidewards.

14. Saddle (1) according to claim 12 or 13, wherein the holder (2) comprises an engagement surface (3) for engagement around a section of an outer wall of the tube (23), wherein the distance between the engagement surface (3) and a free end (6) of the resilient lip (5) is adjusted so as to retain the tube (23).

15. Saddle (1) according to claim 12, 13 or 14, wherein the engagement surface (3), in a cross-section transverse to the central axis (F) of a tube (23) which is to be attached, comprises a circular segment, wherein the center of the circular segment is aligned with the resilient lip (5).

16. Saddle (1) according to any of the preceding claims, wherein the hammer section (7) which is integrally formed with the attachment pin (19), wherein the holder (2) is aligned with the hammer surface (7a) and the attachment pin (19) and is accessible sideways.

17. Form wall assembly, provided with a saddle (1) according to any of the preceding claims.

## Patentansprüche

1. Sattel (1) zum Befestigen eines Rohrs (23) an einer Wand (22), der einen Halter (2) zum Befestigen des Rohrs am Sattel, einen zentralen Befestigungsstift (19), der fest mit dem Halter (2) verbunden ist, um den Sattel (1) in einem Loch (25) in der Wand (22) zu befestigen, und einen Hammerabschnitt (7) zur Übertragung von Hammerkräften, der insbesondere starr mit dem Befestigungsstift (19) verbunden ist, mit einer Hammerfläche (7a) zum Einsetzen des Befestigungsstifts (19) in das Loch (25) in der Wand mittels Einschlagen umfasst, **dadurch gekennzeichnet, dass** der Halter (2) der Reihe nach zwischen der Hammerfläche (7a) und dem Befestigungsstift (19) angeordnet ist, wobei ein Rohraufnahmeraum des Halters (2) in einer Linie mit dem Befestigungsstift (19) angeordnet ist.

2. Sattel (1) nach Anspruch 1, wobei die Hammerfläche (7a) mindestens teilweise in einer Linie mit dem Befestigungsstift (19) angeordnet ist.

3. Sattel (1) nach einem der vorhergehenden Ansprüche, wobei der Hammerabschnitt (7) an einem oberen Teil des Halters (2) angeordnet ist und folglich eine Zuführungsöffnung des Rohrs (23) definiert, wobei die Zuführungsöffnung vorzugsweise relativ zum Befestigungsstift(19) geneigt ist.

4. Sattel (1) nach einem der vorhergehenden Ansprüche, der Verstärkungsrippen (13, 14, 15, 17, 24) umfasst, die zwischen dem Stift und dem Hammerabschnitt (7) angeordnet sind, wobei die Verstärkungsrippen vorzugsweise so angeordnet sind, dass sie dreieckige Muster bilden.

5. Sattel (1) nach einem der vorhergehenden Ansprüche, wobei der Halter (2) eine Eingriffsfläche (3) zum Eingriff um einen Abschnitt einer Außenwand des Rohrs (23) und eine elastische Lippe (5) umfasst, die gegenüber der Eingriffsfläche (3) angeordnet ist und die sich mit einem freien Ende (6) in die Richtung der Eingriffsfläche (3) erstreckt, wobei der Abstand zwischen der Eingriffsfläche (3) und dem freien Ende (6) der elastischen Lippe (5) konfiguriert ist, das Rohr (23) zwischen der Eingriffsfläche (3) und der elastischen Lippe (5) zu halten.

6. Sattel (1) nach Anspruch 4 und 5, wobei die Verstärkungsrippen (13, 14, 15, 17, 25) um die Seite der Eingriffsfläche (3) des Halters (2), die von der Eingriffsfläche (3) weg weist, und zwischen der Eingriffsfläche (3) und der Hammerfläche (7a) angeordnet sind.

7. Sattel (1) nach Anspruch 5 oder 6, wobei in einem Querschnitt quer zur Mittelachse (F) eines Rohrs (23), das befestigt werden soll, die Eingriffsfläche (3) ein kreisförmiges Segment umfasst, wobei sich die Ausdehnung der elastischen Lippe (5) im Wesentlichen durch die Mitte des kreisförmigen Segments erstreckt.

8. Sattel (1) nach einem der vorhergehenden Ansprüche, wobei der Halter (2) konfiguriert ist, das Rohr (23) durch Einschnappen aufzunehmen.

9. Sattel (1) nach einem der vorhergehenden Ansprüche, der eine kreuzförmige Auflagefläche (18) zur Auflage auf der Wand (22) umfasst, wobei die Auflagefläche (18) eine längliche longitudinale Ebene parallel zur Mittelachse (F) eines Rohrs (23), das befestigt werden soll, und eine längliche Querfläche transversal zur Mittelachse (F) eines Rohrs (23) umfasst, das befestigt werden soll, wobei sich der Befestigungsstift (19) vom Kreuzungspunkt der Auflagefläche (18) erstreckt, wobei vorzugsweise die transversale Querfläche und vorzugsweise die longitudinale Ebene eine Breite aufweisen, die in die Richtung der Mittelachse (F) eines Rohrs (23), das befestigt werden soll, schmaler als die Breite des Halters (2) ist.

10. Sattel (1) nach einem der vorhergehenden Ansprüche, wobei die Hammerfläche (7a) transversal zur Einsetzrichtung des Stifts (19) angeordnet ist, wobei die Hammerfläche (7a) vorzugsweise Rillen umfasst.

11. Sattel (1) nach einem der vorhergehenden Ansprüche, der aus Kunststoff, der vorzugsweise integral ausgebildet ist, vorzugsweise mittels Spritzgießen hergestellt ist.

12. Sattel nach einem der vorhergehenden Ansprüche, wobei der Halter (2) eine elastische Lippe (5) mit einem freien Ende (6) umfasst, wobei die elastische Lippe (5) mit ihrem freien Ende (6) ausgerichtet ist, das Rohr (23) im Halter (2) zu halten, wobei die elastische Lippe (5) vorzugsweise eine Endfläche umfasst, die ausgerichtet ist, mit dem Rohr (23) in Kontakt gebracht zu werden.

13. Sattel nach einem der vorhergehenden Ansprüche, der eine elastische Lippe (5), die zum Halter (2) gerichtet ist, zum Befestigen des Rohrs (23) am Sattel (1) umfasst, wobei der Halter (2) eine Öffnung für den Eintritt des Rohrs (23) umfasst, wobei mindestens eine Seite der Öffnung durch die elastische Lippe (5) definiert wird, wobei die Öffnung vorzugsweise seitwärts gerichtet ist.

14. Sattel (1) nach Anspruch 12 oder 13, wobei der Halter (2) eine Eingriffsfläche (3) zum Eingriff um einen Abschnitt einer Außenwand des Rohrs (23) umfasst, wobei der Abstand zwischen der Eingriffsfläche (3) und einem freien Ende (6) der elastische Lippe (5) eingestellt ist, das Rohr (23) zu halten.

15. Sattel (1) nach Anspruch 12, 13 oder 14 wobei die Eingriffsfläche (3) in einem Querschnitt quer zur Mittelachse (F) eines Rohrs, das befestigt werden soll, ein kreisförmiges Segment umfasst, wobei die Mitte des kreisförmigen Segments mit der elastischen Lippe (5) ausgerichtet ist.

16. Sattel nach einem der vorhergehenden Ansprüche, wobei der Hammerabschnitt (7) integral mit dem Befestigungsstift (19) ausgebildet ist, wobei der Halter (2) mit der Hammerfläche (7a) ausgerichtet ist und der Befestigungsstift (19) seitlich zugänglich ist.

17. Schalungswandanordnung, die mit einem Sattel (1) nach einem der vorhergehenden Ansprüche versehen ist.

## Revendications

1. Collier de renforcement (1) pour fixer un tube (23) à un mur (22), composé d'un support (2) pour fixer le tube au collier de renforcement, d'une cheville centrale de fixation (19) qui est connectée de manière fixe au support (2) pour fixer le collier de renforcement dans un trou (25) dans le mur (22), et une section de martèlement (7) pour transférer les forces de martèlement, connecté en particulier de manière rigide à la cheville de fixation (19), ayant une surface de martèlement (7a) pour insérer la cheville de fixation (19) dans le trou (25) dans le mur au moyen du martèlement, **caractérisé en ce que** le support (2) est monté en série entre la surface de martèlement (7a) et la cheville de fixation (19), et où un espace de réception du tube du support (2) est aligné avec la cheville de fixation (19).

2. Collier de renforcement (1) selon la revendication 1, **caractérisé en ce que** la surface de martèlement (7a) est au moins partiellement située en alignement avec la cheville de fixation (19).

3. Collier de renforcement (1) selon l'une quelconque des revendications précédentes, **caractérisé en ce que** la section de martèlement (7) est située sur une partie supérieure du support (2), et définit ainsi une ouverture d'entrée du tube (23), et **en ce que** l'ouverture d'entrée est de préférence inclinée par rapport à la cheville de fixation (19).

4. Collier de renforcement (1) selon l'une quelconque des revendications précédentes, comprenant des nervures de renforcement (13, 14, 15, 17, 24) qui sont situées entre la cheville et la section de martèlement (7), les nervures de renforcement étant de préférence placées de manière à former des motifs triangulaires.

5. Collier de renforcement (1) selon l'une quelconque des revendications précédentes, **caractérisé en ce que** le support (2) comprend une surface d'engagement (3) pour l'engagement autour d'une section d'une paroi externe du tube (23), et un rebord résilient (5) qui est situé à l'opposé de la surface d'engagement et qui, avec une extrémité libre (6), s'étend dans la direction de la surface d'engagement (3), et **en ce que** la distance entre la surface d'engagement (3) et l'extrémité libre (6) du rebord résilient (5) est configurée de manière à retenir le tube (23) entre la surface d'engagement (3) et le rebord résilient (5).

6. Collier de renforcement (1) selon la revendication 4 ou 5, **caractérisé en ce que** les nervures de renforcement (13, 14, 15, 17, 25) sont situées autour du côté de la surface d'engagement (3) du support (2) qui fait face à l'opposé de la surface d'engagement (3), et entre la surface d'engagement (3) et la surface de martèlement (7a).

7. Collier de renforcement (1) selon la revendication 5 ou 6, **caractérisé en ce que**, dans une section transversale à l'axe central (F) d'un tube (23) qui doit être fixé, la surface d'engagement (3) comprend un segment circulaire, où l'extension du rebord résilient (5) s'étend essentiellement à travers le centre du segment circulaire.

8. Collier de renforcement (1) selon l'une quelconque des revendications précédentes, **caractérisé en ce que** le support (2) est configuré de manière à recevoir le tube (23) par basculement.

9. Collier de renforcement (1) selon l'une quelconque des revendications précédentes, comprenant une surface de butée en forme de croix (18) pour venir en butée contre le mur (22), **caractérisé en ce que** la surface de butée (18) comprend un plan longitudinal allongé parallèle à l'axe central (F) d'un tube (23) qui doit lui être fixé, et une surface de croisement transverse à l'axe central (F) d'un tube (23) qui doit être fixé, **en ce que** la cheville de fixation (19) s'étend du point de croisement de la surface de butée (18), et **en ce que** de préférence la surface de croisement transverse et de préférence le plan longitudinal ont une largeur qui est plus étroite que la largeur du support (2) dans la direction de l'axe central (F) d'un tube (23) qui doit être fixé.

10. Collier de renforcement (1) selon l'une quelconque des revendications précédentes, **caractérisé en ce que** la surface de martèlement (7a) est située transversalement à la direction d'insertion de la cheville (19), où la surface de martèlement (7a) comprend de préférence des corrugations.

11. Collier de renforcement (1) selon l'une quelconque des revendications précédentes, fait de matière plastique, de préférence formée de manière intégrale, de préférence par moulage par injection.

12. Collier de renforcement (1) selon l'une quelconque des revendications précédentes, **caractérisé en ce que** le support (2) comprend un rebord résilient (5) avec une extrémité libre (6), **en ce que** avec son extrémité libre (6) le rebord résilient (5) est dirigé de manière à retenir le tube (23) dans le support (2), **en ce que** le rebord résilient (5) comprend de préférence une surface terminale qui est dirigée de manière à être mise en contact avec le tube (23).

13. Collier de renforcement (1) selon l'une quelconque des revendications précédentes, comprenant un rebord résilient (5), dirigé vers le support (2), pour fixer le tube (23) au collier de renforcement (1), en ce que le support (2) comprend une ouverture pour accéder au tube (23), en ce que au moins un côté de l'ouverture est défini par le rebord résilient (5), la dite ouverture étant de préférence dirigée sur le côté.

14. Collier de renforcement (1) selon la revendication 12 ou 13, **caractérisé en ce que** le support (2) comprend une surface d'engagement (3) pour s'engager autour d'une section d'une paroi externe du tube (23), **en ce que** la distance entre la surface d'engagement (3) et une extrémité libre (6) du rebord résilient (5) est ajustée de manière à retenir le tube (23).

15. Collier de renforcement (1) selon la revendication 12, 13 ou 14, **caractérisé en ce que** la surface d'engagement (3), dans une section d'intersection transverse à l'axe central (F) d'un tube (23) qui doit être fixé, comprend un segment circulaire, où le centre du segment circulaire est aligné avec le rebord résilient (5).

16. Collier de renforcement (1) selon l'une quelconque des revendications précédente, **caractérisé en ce que** la section de martèlement (7) qui est formée solidaire de la cheville de fixation (19), et **en ce que** le support (2) est aligné avec la surface de martèlement (7a) et la cheville de fixation (19) et est accessible par le côté.

17. Assemblage de forme mural, pourvu d'un collier de renforcement (1) selon l'une quelconque des revendications précédentes.
